## Europäisches Patentamt

## European Patent Office

## Office européen des brevets

(11) Veröffentlichungsnummer: **0 118 594**
A1

# EUROPÄISCHE PATENTANMELDUNG

(21) Anmeldenummer: 83110727.1

(22) Anmeldetag: 27.10.83

(51) Int. Cl.³: **H 04 M 1/56**
**H 04 Q 7/04**

(30) Priorität: 11.02.83 DE 3304706

(43) Veröffentlichungstag der Anmeldung:
19.09.84 Patentblatt 84/38

(84) Benannte Vertragsstaaten:
DE FR GB SE

(71) Anmelder: ROBERT BOSCH GMBH
Postfach 50
D-7000 Stuttgart 1(DE)

(72) Erfinder: Fritzke, Jörg-Detlev, Dipl.-Ing.
Wildganssteig 66 c
D-1000 Berlin 27(DE)

(74) Vertreter: Schmidt, Hans-Ekhardt
Robert Bosch GmbH Geschäftsbereich Elektronik Patent-
und Lizenzabteilung Forckenbeckstrasse 9-13
D-1000 Berlin 33(DE)

(54) Verfahren zum Übertragen einer kodierten Nachricht.

(57) Es wird ein Verfahren vorgeschlagen, das zum Übertragen einer Nachricht von einem Drahtteilnehmer (10) zu einem mobilen Funkteilnehmer (50) über eine mehreren Funkteilnehmern und Drahtteilnehmern gemeinsame Zentralstation (14) dient. Nach dem erfindungsgemäßen Verfahren erhält der rufende Drahtteilnehmer von der Zentralstation eine gesprochene Wiederholung der von ihm gewählten Nachricht, indem folgende Maßnahmen ergriffen werden. Eine in der Zentralstation vorhandene elektronische Steuerungseinrichtung (18) fragt das in einem Speicher (20) zwischengespeicherte Wählsignal ab und führt es einem Sprachsynthesizer (19) zu, der das abgefragte Wählsignal in eine der menschlichen Stimme entsprechende Wechselspannung umwandelt.

./...

0118594

4/83
EK/PLI Scht/Li
9. 2. 1983

ROBERT BOSCH GMBH, 7000 Stuttgart 1


Verfahren zum Übertragen einer kodierten Nachricht

Stand der Technik

Die Erfindung geht von einem Verfahren nach der Gattung des Anspruchs 1 aus.

Es ist schon ein Verfahren zum kodierten Übertragen einer Nachricht bekannt (NTZ, 1974, Heft 6, K 134), bei dem Teilnehmer des öffentlichen Fernsprechnetzes, die mit einer Zentralstation verbunden sind, mobile Funkrufempfänger selektiv rufen können. Der Drahtteilnehmer, der einen bestimmten Funkteilnehmer rufen will, wählt nach den Ziffern einer Funkbereichsnummer die Ziffern einer mehrstelligen Rufnummer des Funkteilnehmers und einer Information. Die Wählimpulse der Rufnummer werden in der Zentralstation zwischengespeichert und in ein für den ge-wünschten Funkteilnehmer charakteristisches Selektivruf-signal umgesetzt, das über eine Sendestelle ausgestrahlt und von dem gerufenen Funkteilnehmer empfangen und ausgewertet wird.

Da die von dem wählenden Drahtteilnehmer in einen Wählscheiben- oder Tasten-Fernsprechapparat eingegebene Ziffernfolge bei einigen Funksystemen bis zu zwanzig Stellen umfassen kann, ist die Gefahr des Verwählens sehr groß. Bei den bisherigen Rufverfahren hat der Drahtteil-nehmer keine Möglichkeit der Kontrolle, ob die eingegebene Ziffernfolge mit der gewünschten Ziffernfolge übereinstimmt oder nicht.

...

## Vorteile der Erfindung

Das erfindungsgemäße Verfahren mit den kennzeichnenden Merkmalen des Anspruchs 1 hat den Vorteil, daß der Drahtteilnehmer in einfachster Weise die von ihm als Ziffernfolge eingegebene Nachricht mit der von der Zentralstation empfangenen und zur Aussendung vorgesehenen Nachricht vergleichen kann. Durch diese Kontrollmöglichkeit können unnötige Belegungszeiten infolge fehlerhafter Wahl vermieden werden. Ein weiterer Vorteil besteht darin, daß der Sprachsynthesizer für zusätzliche Durchsagen an den Drahtteilnehmer mitausgenutzt werden kann. Solche Durchsagen bzw. Sprachinformationen betreffen beispielsweise eine Mitteilung, daß sich die Aussendung der Nachricht voraussichtlich verzögern wird, daß die Zentrale zur Zeit gestört ist, daß der Funkteilnehmer nicht zu erreichen ist oder daß der Sender ausgefallen ist.

Durch die in den Unteransprüchen aufgeführten Maßnahmen sind vorteilhafte Weiterbildungen und Verbesserungen des im Anspruch 1 angegebenen Verfahrens möglich. Besonders vorteilhaft ist das erfindungsgemäße Verfahren, wenn die Zentralstation einen Komparator enthält, der den der gewünschten Rufnummer entsprechenden Teil des zwischengespeicherten Wählsignals nacheinander mit in einem zweiten Speicher gespeicherten Wählsignalen aller Rufnummern der zu der Zentralstation gehörenden mobilen Funkstationen vergleicht und nur in dem Fall, daß die gewünschte Rufnummer eine der gespeicherten Rufnummern ist, die Umwandlung eines Wählsignals in eine dem rufenden Drahtteilnehmer zugeführte Wechselspannung veranlaßt. Auf diese Weise können in der Zentralstation Anrufe von vornherein ausgeschieden werden, die sich an einen nicht zu dem Funknetz gehörenden Funkteilnehmer richten. Auch hierdurch können unnötige Belegungszeiten vermieden werden.

...

Zeichnung

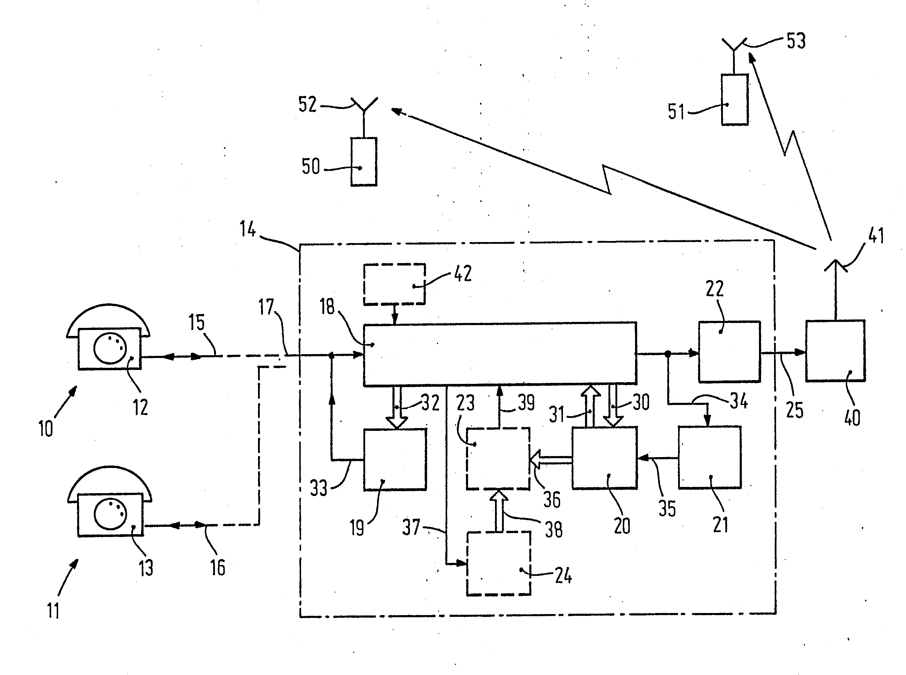

Ein Ausführungsbeispiel der Erfindung ist in der Zeichnung
an Hand einer Figur, die ein vereinfachtes Blockschaltbild
zeigt, dargestellt und in der nachfolgenden Beschreibung
näher erläutert.

Beschreibung der Erfindung

Das in der einzigen Figur dargestellte Blockschaltbild zeigt
die zur Übermittlung einer Nachricht von einem Drahtteilnehmer an einen mobilen Funkteilnehmer benötigten Baugruppen.

Mehrere Drahtteilnehmer 10 und 11, die je einen Fernsprechapparat 12 und 13 des öffentlichen Fernsprechnetzes haben
und zu einer Zentralstation 14 gehören, stehen über je eine
Teilnehmerleitung 15, 16 mit einem Eingang 17 der Zentralstation in Verbindung. Die Zentralstation umfaßt eine mit
dem Eingang 17 verbundene elektronische Steuerungseinrichtung 18, das ist vorzugsweise eine Mikroprozessorschaltung,
an die mehrere Baugruppen angeschlossen sind, nämlich ein
Sprachsynthesizer 19, ein erster Speicher 20 für das von
einem Drahtteilnehmer, zum Beispiel 10, ausgesendete Wählsignal und ein Löschsignalauswerter 21 sowie ein Wahlumsetzer 22. Gegebenenfalls kann sich an die Steuerungseinrichtung 18 noch ein Komparator 23 anschließen, der mit
dem ersten Speicher 20 sowie mit einem zweiten Speicher 24
für alle Rufnummern des Funknetzes in Verbindung steht.

An einen Ausgang 25 der Zentralstation 14 schließt sich ein
Sender 40 mit einer Sendeantenne 41 an. Der Zentralstation
14 bzw. dem Sender 40 sind mehrere mobile Funkstationen
50, 51 zugeordnet, das sind beispielsweise batteriebetriebene Taschenempfänger, die mit je einer Empfangsantenne
52, 53 ausgerüstet sind.

...

Die Wirkungsweise der vorstehend beschriebenen Schaltung ist
folgende.

Will ein Drahtteilnehmer, zum Beispiel 10, einen bestimmten
Funkteilnehmer, zum Beispiel 50, erreichen und ihm eine
Information übermitteln, so wählt er nach dem Abheben des
Handapparates seines Fernsprechapparates 12 im Anschluß an
die Rufnummer der Zentralstation 14 eine Ziffernfolge, die
die Rufnummer des gewünschten Funkteilnehmers und eine für
den Funkteilnehmer bestimmte Information zum Inhalt hat. Der
Fernsprechapparat liefert ein der Ziffernfolge entsprechendes kodiertes Wählsignal, das über die Teilnehmerleitung 15
zu der Zentralstation 14 bzw. deren Steuerungseinrichtung 18
gelangt. Die Steuerungseinrichtung sorgt dafür daß das Wählsignal über eine erste Leitung 30 in dem ersten Speicher 20
zwischengespeichert wird. Ist das Wählsignal vollständig gespeichert, so wird es durch die Steuerungseinrichtung über
die erste Leitung 30 abgefragt. Der Speicherinhalt gelangt
dann über die zweite Leitung 31 und eine dritte Leitung 32
an den Sprachsynthesizer 19, der das Wählsignal in eine der
menschlichen Sprache analoge Wechselspannung umwandelt. Diese
Wechselspannung wird über eine vierte Leitung 33 und die Teilnehmerleitung 15 zu dem Drahtteilnehmer 10 übertragen, der
nun die von ihm zuvor eingegebene Ziffernfolge in gesprochener
Form im Hörer seines Handapparates hören und mit der gewünschten, in der Regel schriftlich vorliegenden Ziffernfolge vergleichen kann. Stellt er eine Diskrepanz fest, so wählt er
eine Hilfsinformation in Form einer bestimmten, einer Löschinformation entsprechenden Ziffer und löscht damit über die
Steuerungseinrichtung 18, eine fünfte Leitung 34, den Löschsignalauswerter 21 und eine sechste Leitung 35 den ersten
Speicher 20. Damit wird der Rufvorgang vorzeitig beendet, und
der Drahtteilnehmer kann erneut wählen.

...

Trifft jedoch in der Zentralstation 14 innerhalb einer bestimmten vorgegebenen Zeit nach Aussendung der Wechselspannung des
Sprachsynthesizers 19 kein der bestimmten Ziffer entsprechendes
Wählsignal ein, so wird, durch die Steuerungseinrichtung 18
gesteuert, das zwischengespeicherte Wählsignal abgefragt und
dem Wahlumsetzer 22 zugeführt, der das Wählsignal in ein für
die HF-Übertragung geeignetes Modulationssignal umsetzt und an
den Sender 40 weiterleitet. Der Sender 40 sendet dieses Signal
über seine Antenne 41 aus, und alle sich im Sendebereich des
Senders befindlichen mobilen Funkstationen empfangen es und
werten es aus. Nur diejenige Funkstation mit der gewählten Rufnummer spricht darauf an und kann dann die Nachricht des Drahtteilnehmers aufnehmen.

In der Figur sind der Komparator 23 und der zweite Speicher 24
durch gestrichelte Blockschaltungssymbole gekennzeichnet, um
anzudeuten, daß diese Baugruppen wahlweise vorhanden sein
können, um ein in der Zentralstation eingehendes Wählsignal
dahingehend zu prüfen, ob die gewünschte Rufnummer überhaupt
zum Funknetz gehört. Zu diesem Zweck wird der der Rufnummer
entsprechende Teil des zwischengespeicherten Wählsignals aus
dem ersten Speicher 20 abgefragt und einem ersten Eingang 36
des Komparators 23 zugeführt. Aus dem zweiten Speicher 24 werden durch die Steuerungseinrichtung 18 über eine siebente Leitung 37 nacheinander alle zum Funknetz gehörenden Rufnummern
abgefragt und einem zweiten Eingang 38 des Komparators 23 zugeführt. Der Komparator vergleicht nacheinander automatisch die
gewünschte Rufnummer mit allen gespeicherten Rufnummern. Nur
wenn sich die gewünschte Rufnummer unter den in dem zweiten
Speicher 24 gespeicherten Rufnummern befindet, gibt der Komparator an seinem Ausgang 39 ein bestimmtes Signal ab, das über
die Steuerungseinrichtung 18 die Verbindung von dem ersten
Speicher 20 über die zweite Leitung 31 zu dem Wahlumsetzer 22
freigibt, so daß die Umsetzung stattfinden kann.

...

Der Sprachsynthesizer 19 kann vorteilhafterweise auch dazu
ausgenutzt werden, dem Drahtteilnehmer von der Zentralstation
aus eine Sprachinformation zu geben, um ihn beispielsweise
darauf aufmerksam zu machen, daß die Zentralstation gestört
ist, daß sich die Aussendung der Nachricht verzögern wird,
daß der gerufene Teilnehmer nicht zu erreichen ist oder dergleichen. In diesem Fall können mittels einer Eingabevorrichtung 42 in der Zentralstation 14 manuell oder auch automatisch
entsprechende Steuerbefehle eingegeben werden, die über die
Steuerungseinrichtung 18 zu einem bestimmten Zeitpunkt den
Sprachsynthesizer 19 über die Leitung 32 anregen, eine der jeweiligen Sprachinformation entsprechende Wechselspannung für
den Drahtteilnehmer abzugeben.

4/83
EK/PLI Scht/Li
9. 2. 1983

ROBERT BOSCH GMBH, 7000 Stuttgart 1

Ansprüche

1. Verfahren zum Übertragen einer kodierten Nachricht von
   einem Drahtteilnehmer zu einem mobilen Funkteilnehmer
   über eine mehreren Funkteilnehmern und Drahtteilnehmern
   gemeinsame Zentralstation in Form eines von dem Drahtteilnehmer an die Zentralstation übermittelten Wählsignals, das in der Zentralstation automatisch zwischengespeichert und vor der Aussendung in ein Modulationssignal umgewandelt wird, dadurch gekennzeichnet, daß
   eine in der Zentralstation (14) vorhandene elektronische
   Steuerungseinrichtung (18) das zwischengespeicherte
   Wählsignal vor der Umwandlung abfragt, daß ein mit dem
   Zwischenspeicher (20) verbundener Sprachsynthesizer (19)
   das abgefragte Wählsignal in eine der menschlichen
   Sprache analoge Wechselspannung umwandelt, daß diese
   Wechselspannung dem Drahtteilnehmer (10) zugeführt und
   dort hörbar gemacht wird und daß die Umwandlung und Aussendung des zwischengespeicherten Wählsignals gesperrt
   wird, wenn der Drahtteilnehmer innerhalb einer vorgegebenen Zeit eine vorgegebene Hilfsinformation nachgewählt
   hat, und daß die Umwandlung und Aussendung erfolgt, wenn
   der Drahtteilnehmer diese Information innerhalb der vorgegebenen Zeit nicht gewählt hat.

...

2. Verfahren nach Anspruch 1, dadurch gekennzeichnet, daß die kodierte Nachricht aus der mehrstelligen Rufnummer des gewünschten Funkteilnehmers und einer wählbaren Information für den Funkteilnehmer besteht.

3. Verfahren nach Anspruch 1, dadurch gekennzeichnet, daß die Zentralstation (14) einen Komparator (23) enthält, der den der gewünschten Rufnummer entsprechenden Teil des zwischengespeicherten Wählsignals mit in einem zweiten Speicher (24) gespeicherten Wählsignalen der Rufnummern der zu der Zentralstation gehörenden mobilen Funkteilnehmer vergleicht und nur in dem Fall, daß die gewünschte Rufnummer eine der gespeicherten Rufnummern ist, die Umwandlung des Wählsignals des rufenden Drahtteilnehmers (10) in eine Wechselspannung veranlaßt.

4. Verfahren nach Anspruch 1, dadurch gekennzeichnet, daß die Steuerungseinrichtung (18) ein Mikroprozessor ist.

5. Verfahren nach Anspruch 1 oder einem der folgenden, dadurch gekennzeichnet, daß die Steuerungseinrichtung (18) bzw. eine damit verbundene Eingabevorrichtung (42) den Sprachsynthesizer (19) dazu veranlaßt, weitere an den Drahtteilnehmer (10) zu übertragende Informationen, wie zum Beispiel Mitteilungen über Störungen in der Zentralstation (14), Nichterreichen des gerufenen Funkteilnehmers (50), Ausfall des Senders (40) oder dergleichen, in Form einer der menschlichen Sprache analogen Wechselspannung zu bilden.

## EUROPÄISCHER RECHERCHENBERICHT

**0118594**

Nummer der Anmeldung

EP 83 11 0727

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | NT NACHRICHTEN TELEFONBAU UND NORMALZEIT, Nr. 84, 1982, Seiten 57-65, Dreieich, DE. M. HEINZ et al.: "Personenruf-Funkanlage für landesweite Rufnetze" * Seite 58, Bild 1 und rechte Spalte, Zeilen 6-8; Seite 59, linke Spalte , Zeile 25 - rechte Spalte, Zeile 9; Seite 62, linke Spalte, Zeilen 1-7 * | 1 | H 04 M 1/56<br>H 04 Q 7/04 |
| A | Idem.<br><br>--- | 2-5 | |
| Y | EP-A-0 041 195 (GENERAL ELECTRIC CO.) * Seite 6, Zeile 18 - Seite 9, Zeile 21; Seite 10, Zeilen 5,6 * | 1 | |
| A | <br>--- | 2,4,5 | **RECHERCHIERTE SACHGEBIETE (Int. Cl. 3)**<br><br>H 04 B<br>H 04 Q<br>H 04 M |
| A | DE-A-2 844 559 (ELEKTROMECHANIK AACH) * Seite 2, Anspruch 3; Seite 5, Zeilen 2-14; Seite 8, Zeile 8 - Seite 9, letzte Zeile; Figur 1 *<br><br>---     -/- | 1,4 | |

Der vorliegende Recherchenbericht wurde für alle Patentansprüche erstellt.

| Recherchenort | Abschlußdatum der Recherche | Prüfer |
|---|---|---|
| DEN HAAG | 24-05-1984 | GULDNER H.D. |

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | JAPAN TELECOMMUNICATION REVIEW, Band 19, Nr. 3, Juli 1977, Seiten 217-225, Tokyo, JP M. KOMURA et al.: "New radio paging system" * Seite 219, Zeilen 1-3 * | 3 | |
| A | TECHNISCHE RUNDSCHAU, Nr. 26, 29. Juni 1982, Seite 9, Bern, CH H. KOCH et al.: "Ein Funkrufsystem für Städte und Regionen" * Vom Beginn bis zur 3. Spalte, Zeile 9; Bilder 1,3 * | 1,2,4, 5 | |
| A | DE-A-3 102 339 (SEL) * Seite 5, Zeilen 5-24; Seite 7, Zeile 5 - Seite 8, Zeile 5; Figuren 1,3 * | 1,4 | |
| A | PATENTS ABSTRACTS OF JAPAN, Band 5, Nr. 186(E-84)(858), 25. November 1981 & JP - A - 56 111 362 (HITACHI SEISAKUSHO K.K.) 03.09.1981 * Insgesamt * | 1 | RECHERCHIERTE SACHGEBIETE (Int. Cl. ³) |
| A | PATENTS ABSTRACTS OF JAPAN, Band 5, Nr. 86(E-60)(758), 5. Juni 1981 & JP - A - 56 34269 (NIPPON DENSHIN DENWA KOSHA) 06.04.1981 * Insgesamt * | 1 | |

--- -/-

Der vorliegende Recherchenbericht wurde für alle Patentansprüche erstellt.

| Recherchenort | Abschlußdatum der Recherche | Prüfer |
|---|---|---|
| DEN HAAG | 24-05-1984 | GULDNER H.D. |

Europäisches
Patentamt

| EINSCHLÄGIGE DOKUMENTE | | | Seite 3 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| A | PATENTS ABSTRACTS OF JAPAN, Band 6, Nr. 155(E-125)(1033), 17. August 1982 <br> & JP - A - 57 76966 (FUJITSU K.K.) 14.05.1982 * Insgesamt * <br><br> ----- | 3 | |
| | | | RECHERCHIERTE SACHGEBIETE (Int. Cl. ³) |

Der vorliegende Recherchenbericht wurde für alle Patentansprüche erstellt.

| Recherchenort <br> DEN HAAG | Abschlußdatum der Recherche <br> 24-05-1984 | Prüfer <br> GULDNER H.D. |
|---|---|---|